# EUROPEAN PATENT SPECIFICATION

(11) **EP 2 682 796 B1**
(45) Date of publication and mention of the grant of the patent: **14.01.2015**
(21) Application number: 12174557.4
(22) Date of filing: 02.07.2012
(51) Int. Cl.: G02B 7/02, G02B 7/04, G02B 7/08, G02B 27/40

(54) **Focusing device**
Fokussierungsvorrichtung
Dispositif de focalisation

(43) Date of publication of application: 08.01.2014
(73) Proprietor: Axis AB, 223 69 Lund (SE)
(72) Inventor: Hjelmström, Jonas, SE-245 92 Staffanstorp (SE)
(74) Representative: Mannesson, Julia Emilia Silvia

(56) References cited:
- EP-A1- 0 216 728
- WO-A1-2009/151122
- US-A- 4 390 260
- US-A- 4 831 615
- US-A1- 2007 286 591
- US-A1- 2008 129 858

## Description

### Technical field

The present invention relates to a focusing device.

### Background art

In monitoring cameras having manual focus lenses the focus adjustment is made using the lens focus ring. In some cameras, in addition to a course manual adjustment, focus may be fine tuned remotely. This may be carried out by either moving parts of the lens system or the image sensor. Mechanical defects, originating in the manufacturing of the camera and/or its parts often result in the image planes of the image sensor and the lens system not being parallel with each other. The image sensor and the lens will consequently have a certain tilt angle in relation to each other which results in that areas of the resulting image are unfocused. Fine tuning the focus adjustment by moving the image sensor, rather than the parts of the lens, often have the additional problem that this tilt angle is increased or at least changed.

Patent application US20070286591A1 discloses a lens module having an adjustable lens unit. The lens module comprises a lens unit including a lens barrel. The lens barrel is mounted in an outer barrel to which it engages threadedly. The outer barrel serves to guide the lens barrel during adjustment of the lens unit. The lens barrel further has a driven portion which is in the form of a gear and which is driven to rotate by a speed reduction unit, and in particular by a speed reduction gear. The driven portion is driven to rotate by the speed reduction gears such that the lens barrel is driven to rotate.

### Summary of the invention

In view of the above, an objective of the invention is to solve or at least reduce one or several of the drawbacks discussed above. Generally, the above objective is achieved by the attached independent patent claims.

According to a first aspect, the present invention is realized by a focusing device. The focusing devise comprises three guiding members, a belt, and a lens arrangement comprising a threaded portion, the three guiding members surrounding the lens arrangement, at least one of the guiding members comprising a threaded portion, the threaded portions of the at least one guiding member and the lens arrangement being arranged to engage with each other, wherein, when in operation mode, the belt is arranged around the three guiding members such that the three guiding members are urged towards the lens arrangement, and the at least one of the guiding members comprising a threaded portion is arranged to be rotated thus rotating the lens arrangement. The threaded portion is arranged to be rotated thus rotating the lens arrangement such that focus of the focusing device is adjusted.

This is advantageous in that focus of the focusing device can be adjusted. Additionally, an inexpensive and compact solution is achieved. Since the lens arrangement can have a fixed focus, a less expensive lens arrangement can be used. Furthermore, the lens arrangement can be exchanged easily. The belt is advantageous in that the tolerances needed for being able arrange the lens arrangement between the guiding members, e.g. by screwing, are compensated for.

The focusing device may further comprise a calibration mode, wherein, when in calibration mode, the at least one of the guiding members comprising a threaded portion is rotatable in relation to the other guiding members.

The focusing device may be designed such that, in calibration mode, if the at least one of the guiding members comprising a threaded portion is rotated an amount, the lens arrangement is adjusted a distance corresponding to said amount, said distance being essentially parallel with an optical axis of the focusing device. This is advantageous in that it enables tilting the lens arrangement.

The focusing device may be designed such that, in calibration mode, if the at least one of the guiding members comprising a threaded portion is rotated an amount, the lens arrangement is adjusted a distance corresponding to said amount such that the lens arrangement is tilted an angle, said distance being essentially parallel with an optical axis of the focusing device.

The belt may comprise a plurality of teeth arranged to engage with a toothed portion of at least one of the three guiding members. This is advantageous in that a firmer grip is achieved. In the embodiment when all three guiding members have a respective toothed portion, an advantage is that the guiding members are prevented to move in relation to each other after the belt has been arranged around the guiding members.

The lens arrangement may comprise a lens having the threaded portion, or a lens arranged in a lens holder, the lens holder having the threaded portion. This is advantageous in that both lenses having threaded portions and not having threaded portions can be used.

The least one of the guiding members comprising a threaded portion may be arranged to be rotated by a motor comprised in the guiding member. This is advantageous in that space is used more efficiently. Furthermore, the focus can be adjusted remotely.

The focusing device may further comprise a motor, wherein the at least one of the guiding members comprising a threaded portion is arranged to be rotated by the belt which may be arranged to be rotated by the motor. This is advantageous in that the focus can be adjusted remotely.

All three guiding members may comprise a threaded portion and the threaded portions of the guiding members and the lens arrangement may be arranged to engage with each other. This is advantageous in that the rotating of the lens arrangement is made more efficient.

At least one of the three guiding members may each comprise a retainer for retaining the belt. This is advantageous in that the belt is kept in place.

The belt may comprise a plurality of teeth arranged to engage with a toothed portion of the motor. This is advantageous in that the belt is kept in place and in that a firmer grip is achieved.

The focusing device may further comprise a plate, wherein the three guiding members, the motor, and an image sensor are attached to the plate. This is advantageous in that the three guiding members, the motor, and the image sensor can, e.g., be moulded using one mould.

The three guiding members may be at least one of: attached to the plate using joints, or of cylindrical shape and each enclosing a projection protruding from the plate.

The projections may each comprise a retainer for retaining the respective guiding member. This is advantageous in that the guiding member is kept in place.

The belt may be elastic, and/or the belt may be arranged around the motor and the motor may be arranged to be subject to an outwardly force for urging the motor in an outwardly direction such that the belt is stretched. This is advantageous in that the tolerances needed for being able to screw the lens arrangement between the guiding members are compensated for.

The focusing device may further comprise a mechanical stop for stopping the rotation of the lens arrangement at a predetermined limit. This is advantageous in that the risk of the lens arrangement damaging the image sensor is omitted and/or that the lens arrangement falls out.

The belt may be made of rubber and/or plastic.

At least one of the three guiding members, the lens arrangement, the plate, and the projections may be made of plastic and/or metal.

The guiding members may each comprise an indicator for indicating a starting position for the respective threaded portion. This is advantageous in that it simplifies the insertion of the lens arrangement in between the guiding members. Furthermore, it acts as an indication for tilt calibration of the lens arrangement.

According to a second aspect, the present invention is realized by a method for calibrating a focusing device according to the first aspect. The method comprises arranging the lens arrangement such that it is surrounded by the three guiding members, calibrating the focusing device, arranging the belt around the three guiding members such that the three guiding members are urged towards the lens arrangement.

The step of calibrating may comprise: rotating the at least one of the guiding members comprising a threaded portion an amount such that the lens arrangement is adjusted a distance corresponding to said amount, said distance being essentially parallel with an optical axis of the focusing device

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Other features and advantages of the present invention will become apparent from the following detailed description of a presently preferred embodiment, with reference to the accompanying drawings, in which
Fig. 1 a is a perspective view of an embodiment of the inventive focusing device,
Fig. 1b is a perspective view the embodiment of the inventive focusing device of fig. 1 a,
Fig. 2 is a perspective view of an embodiment of the inventive focusing device,
Fig. 3 is a top view of an embodiment of the inventive focusing device,
Fig. 4 is a perspective view of an embodiment of the inventive focusing device, and
Fig. 5 is a perspective view of an embodiment of the inventive focusing device.

### Detailed description of preferred embodiments of the invention

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

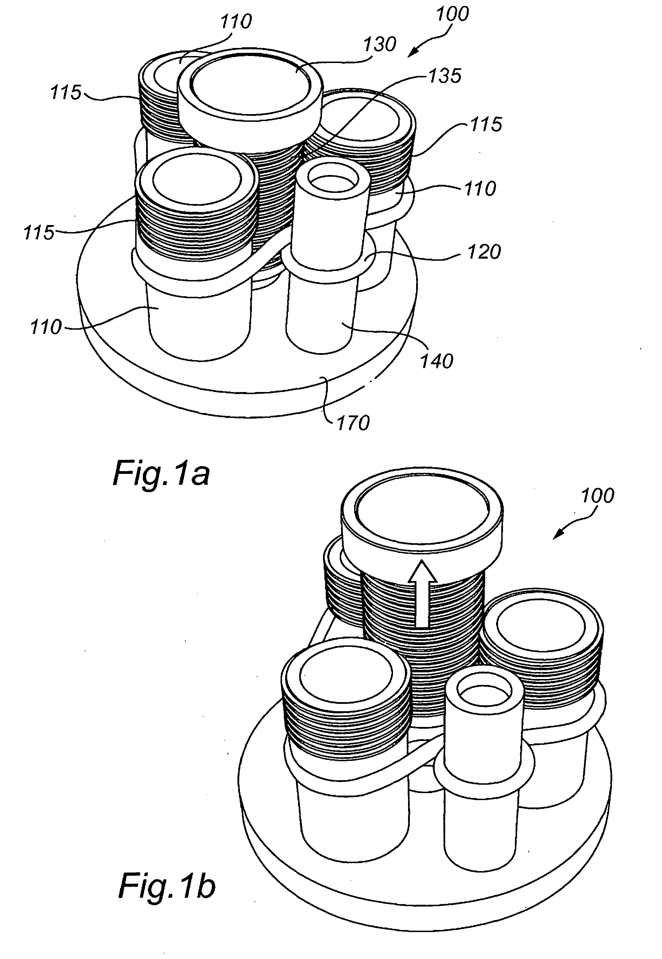

Fig. 1 a illustrates an embodiment of the inventive focusing device. The focusing device 100 comprises three guiding members 110, a belt 120, and a lens arrangement 130 comprising a threaded portion 135. As is visible in fig. 1a, the three guiding members 110 are arranged around the lens arrangement 130 and surround the lens arrangement 130. In this embodiment, the three guiding members 110 each comprise a threaded portion 115. The threaded portions 115 and 135 of the guiding members 110 and of the lens arrangement 110 engage with each other.

The belt 120 is arranged around the three guiding members 110 such that the three guiding members 110 are urged towards the lens arrangement 130. The focusing device 100 further comprises a motor 140. When the motor 140 is rotated, the belt 120 is rotated, thus rotating the three guiding members 110. When the three guiding members 110 rotate, the lens arrangement 130 rotates. In this way, the lens arrangement 130 is arranged to travel upwards, as is illustrated by the arrow in fig. 1b and/or downwards (not shown).

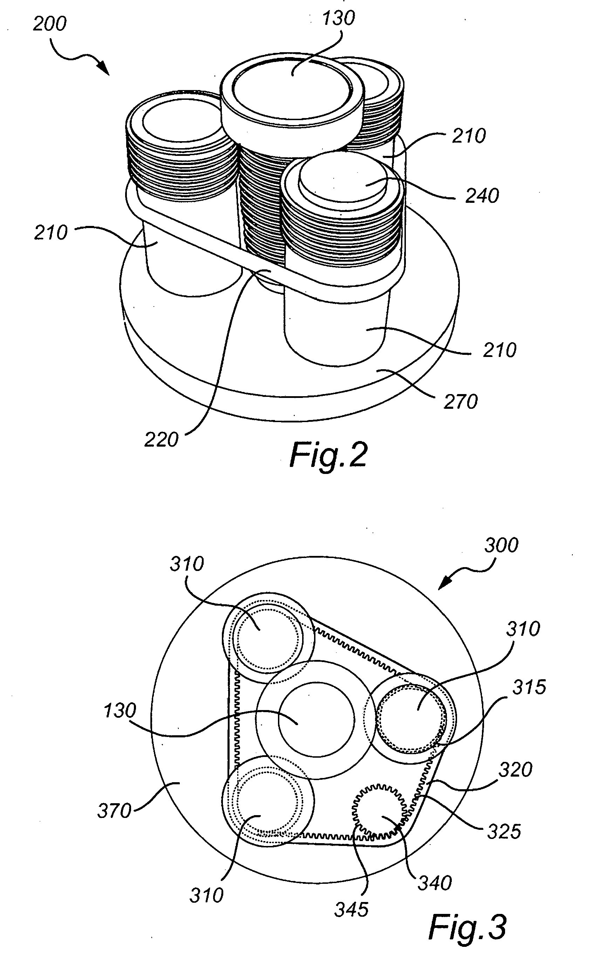

In one embodiment, see fig. 2, the motor is comprised in one of the guiding members. The focusing device 200 comprises three guiding members 210 and a lens arrangement 130. One of the guiding members 210 comprises the motor 240. When the motor 240 rotates, the guiding member 210 comprising the motor 240 rotates. This causes the belt 220 to rotate which makes the rest of the guiding members 210 rotate which cause the lens arrangement 130 to rotate.

The lens arrangement can comprise a lens having a threaded portion, as is shown in, e.g., figs. 1ab and 2. Alternatively, the lens arrangement can comprise a lens not having a threaded portion. Then, the lens is arranged in a lens holder having a threaded portion.

Fig. 3 is a top view of an inventive focusing device. The focusing device 300 comprises three guiding members 310, a lens arrangement 130, a motor 340, and a belt 320. One of the guiding members 310 comprises a toothed portion 315. The belt 320 comprises a plurality of teeth 325. The plurality of teeth 325 and the toothed portion 315 engage with each other. The other guiding members 310 can also have toothed portions. The motor 340 also comprises a toothed portion 345 arranged to engage with the plurality of teeth 325.

In figs. 1 a-b, the belt is wrapped around the motor. From fig. 3 it can be seen that the belt need not be wrapped around the motor. Instead, the belt simply surrounds the motor.

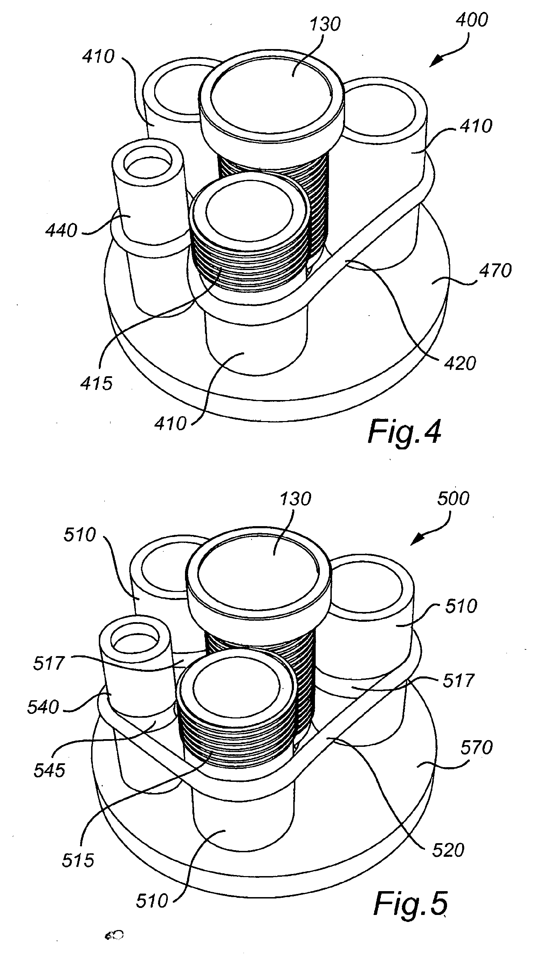

Fig. 4 discloses a focusing device 400. Focusing device 400 comprises three guiding members 410, a lens arrangement 130, a motor 440, and a belt 420. Only one of the guiding members comprises a threaded portion 415. Here the belt 420 is wrapped around the motor 440.

Fig. 5 illustrates a focusing device 500. Focusing device 500 comprises three guiding members 510, a lens arrangement 130, a motor 540, and a belt 520. Only one of the guiding members comprises a threaded portion 515. Here the belt 520 is not wrapped around the motor 540. Two of the guiding members comprise a retainer 517 and the motor comprises a retainer 547. In one embodiment, all three guiding members can comprise a retainer and in one embodiment, one guiding member can comprise a retainer. The retainers 517 and 547 are arranged for retaining the belt 520. The retainers in fig. 5 are embodied as grooves. Alternatively, the retainers can be embodied as lips.

In figs. 1-5 are plates 170-570 illustrated. The motors 140-540 and the guiding members110-510 are attached to the plates 170-570. Image sensors can also be attached to the plates, e.g., in an underside of the plates (not shown). The plate has an opening so that light can travel from the lens arrangement to the image sensor. In some embodiments, the lens arrangement is not prevented from travelling through the opening in the plate. The guiding members can be attached to the plates using joints. Alternatively, the guiding members can be of cylindrical shape and each enclosing a projection protruding from the plates. Then, the projections can each comprise a retainer for retaining the respective guiding member. The retainer can, e.g., be a spring or a barb.

It is to be noted that all sorts of combinations of the different embodiments are within the scope of the invention.

The guiding members can be more than three. Preferably, the size of the guiding members is large enough so that the belt is not in contact with the lens arrangement. The focusing device experiences a small amount of friction since the threaded portions of the lens arrangement and at least one of the guiding members engage with each other.

The threaded portions of the guiding members and of the lens arrangement preferably have the same pitch. The pitch of the lens arrangement can, e.g., be 0,5 mm/revolution. The diameters of the guiding members and of the lens arrangement need not be the same.

In one embodiment, the focusing device comprises a mechanical stop for stopping the rotation of the lens arrangement at a predetermined limit. In this way, the risk of damaging the image sensor by forcing the lens arrangement into the image sensor is mitigated. Also, the risk of damaging the lens arrangement due to the lens arrangement falling out of the focusing device is avoided.

In one embodiment, the belt is elastic and thus is able to urge the guiding members towards the lens arrangement. Alternatively, in the embodiment where the motor is not arranged in a guiding member, the belt is arranged around the motor and the motor is subject to an outwardly force for urging the motor in an outwardly direction such that the belt is stretched. This force can, e.g., be realized using a spring and/or a barb.

The belt can comprise longitudinal reinforcement so that the belt is stretchable only up to a limit.

The belt can surround the guiding members at different heights of the guiding members, e.g., in a middle, near a bottom or near a top of the guiding members.

The belt can be made of rubber and/or plastic.

At least one of the three guiding members, the lens arrangement, the plate, and the projections can be made of plastic and/or metal.

It is easy to obtain a high resolution of the motor. E.g., the motor rotates two revolutions; the lens arrangement rotates one revolution. The relation between the revolutions of the motor and the lens arrangement can be adjusted by adjusting the diameters of the motor and the lens arrangement.

The focusing device can be in a calibration mode. In one embodiment, in calibration mode, is the belt not arranged around the guiding members. Therefore, it is possible to rotate one or several of the guiding members comprising a threaded portion in relation to the other guiding members. This makes it possible to tilt the lens arrangement. When rotating a guiding member having a threaded portion in relation to the other guiding members, the lens arrangement is adjusted in a direction essentially parallel with an optical axis of the focusing device. The other guiding members are usually not affected by this rotation. The focusing device can, e.g., be in calibration mode when installing or when manufacturing the focusing device.

The focusing device can be in operation mode. In operation mode, the belt is arranged around the three guiding members such that the three guiding members are urged towards the lens arrangement. If the at least one of the guiding members comprising a threaded portion is rotated, the lens arrangement is rotated. In this way, the lens arrangement is moved in a direction essentially parallel with an optical axis of the focusing device and the focusing of the focusing device is adjusted.

Next, a method for installing the focusing device will be described. When manufacturing the focusing device, the guiding members are attached to the plate. Alternatively, the guiding members and the plate are molded in one piece. After that, the lens arrangement is arranged in between the guiding members such that it is surrounded by the guiding members. The lens arrangement is, e.g., screwed in between the guiding members. The focusing device can then be calibrated. This calibration can be performed by rotating one or several of the guiding members comprising a threaded portion an amount such that the lens arrangement is adjusted a distance corresponding to said amount, said distance being essentially parallel with an optical axis of the focusing device. This results in that the lens arrangement can be tilted. In this way, the lens arrangement can be calibrated to be essentially parallel with the image sensor. The belt is then arranged around the guiding members such that the guiding members are urged towards the lens arrangement. Then, the guiding members cannot rotate in relation to each other, thus keeping the calibration.

The guiding members can comprise an indicator for indicating a starting position for the respective threaded portion. During installation, the guiding members can be rotated so that all indicators are facing one and the same direction.

As is apparent from the above, it is quite easy to exchange the lens arrangement for another lens arrangement. Furthermore, the calibration of the focusing device is kept during the exchange.

It is to be noted that all embodiments and features described in this application are applicable on all aspects of the invention.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. Focusing device (100, 200, 300, 400, 500) having an operation mode, the focusing device (100, 200, 300, 400, 500) comprising: guiding members (110, 210, 310, 410, 510), a belt (120, 220, 320, 420, 520), and a lens arrangement (130) comprising a threaded portion (135),
at least one of the guiding members (110, 210, 310, 410, 510) comprising a threaded portion (115, 315, 415, 515),
the threaded portions (115, 315, 415, 515, 135) of the at least one guiding member (110, 210, 310, 410, 510) and the lens arrangement (130) being arranged to engage with each other,
**characterized in that**
there are three guiding members (110, 210, 310, 410, 510), and
the three guiding members (110, 210, 310, 410, 510) surround the lens arrangement (130),
wherein, when in operation mode, the belt (120, 220, 320, 420, 520) is arranged around the three guiding members (110, 210, 310, 410, 510) such that the three guiding members (110, 210, 310, 410, 510) are urged towards the lens arrangement (130), and the at least one of the guiding members (110, 210, 310, 410, 510) comprising a threaded portion (115, 315, 415, 515) is arranged to be rotated thus rotating the lens arrangement (130).

2. Focusing device (100, 200, 300, 400, 500) according to claim 1, further comprising a calibration mode, wherein, when in calibration mode, the at least one of the guiding members (110, 210, 310, 410, 510) comprising a threaded portion (115, 315, 415, 515) is rotatable in relation to the other guiding members (110, 210, 310, 410, 510).

3. Focusing device (100, 200, 300, 400, 500) according to claim 2, said focusing device (100, 200, 300, 400, 500) being designed such that, in calibration mode, if the at least one of the guiding members (100, 200, 300, 400, 500) comprising a threaded portion (115, 315, 415, 515) is rotated an amount, the lens arrangement (130) is adjusted a distance corresponding to said amount, said distance being essentially parallel with an optical axis of the focusing device (100, 200, 300, 400, 500).

4. Focusing device (300) according to one of claims 1-3, wherein the belt (320) comprises a plurality of teeth (325) arranged to engage with a toothed portion (315) of at least one of the three guiding members (310).

5. Focusing device according to any one of claims 1-4, wherein the lens arrangement (130) comprises a lens having the threaded portion (135), or a lens arranged in a lens holder, the lens holder having the threaded portion (135).

6. Focusing device (200) according to any one of claims 1-5, wherein the at least one of the guiding members (210) comprising a threaded portion is arranged to be rotated by a motor (240) comprised in the guiding member (210).

7. Focusing device (100, 300, 400, 500) according to any one of claims 1-5, further comprising a motor (140, 340, 440, 540), wherein the at least one of the guiding members (110, 310, 410, 510) comprising a threaded portion (115, 315, 415, 515) is arranged to be rotated by the belt (120, 320, 420, 520) which is arranged to be rotated by the motor (140, 340, 440, 540).

8. Focusing device (100, 200) according to any one of claims 1-7, wherein all three guiding members (110, 210) comprise a threaded portion (115) and wherein the threaded portions (115, 135) of the guiding members (110, 210) and the lens arrangement (130) are arranged to engage with each other.

9. Focusing device (500) according to any one of claims 1-8, wherein at least one of the three guiding members (510) each comprise a retainer (517) for retaining the belt (520).

10. Focusing device (300) according to any one of claims 6-9, wherein the belt (320) comprises a plurality of teeth (325) arranged to engage with a toothed portion (345) of the motor (340).

11. Focusing device (100, 300, 400, 500) according to any one of claims 7-10, wherein
the belt (120, 320, 420, 520) is elastic, and/or
the belt (120, 320, 420, 520) is arranged around the motor (140, 340, 440 540) and the motor (140, 340, 440 540) is arranged to be subject to an outwardly force for urging the motor (140, 340, 440 540) in an outwardly direction such that the belt (120, 320, 420, 520) is stretched.

12. Focusing device (100, 200, 300, 400, 500) according to any one of claims 1-11, further comprising a mechanical stop for stopping the rotation of the lens arrangement (130) at a predetermined limit.

13. Focusing device (100, 200, 300, 400, 500) according to any one of claims 1-12, wherein the guiding members (110, 210, 310, 410, 510) each comprise an indicator for indicating a starting position for the respective threaded portion (115, 315, 415, 515).

14. Method for installing a focusing device (100, 200, 300, 400, 500) according to any one of claims 1-13 comprising:
arranging the lens arrangement (130) such that it is surrounded by the three guiding members (110, 210, 310, 410, 510),
calibrating the focusing device (100, 200, 300, 400, 500),
arranging the belt (120, 220, 320, 420, 520) around the three guiding members (110, 210, 310, 410, 510) such that the three guiding members (110, 210, 310, 410, 510) are urged towards the lens arrangement (130).

15. Method for installing a focusing device (100, 200, 300, 400, 500) according to claim 14, wherein the step of calibrating comprises:
rotating the at least one of the guiding members (110, 210, 310, 410, 510) comprising a threaded portion (115, 315, 415, 515) an amount such that the lens arrangement (130) is adjusted a distance corresponding to said amount, said distance being essentially parallel with an optical axis of the focusing device (100, 200, 300, 400, 500).

## Patentansprüche

1. Fokussierungsvorrichtung (100, 200, 300, 400, 500), die einen Betriebsmodus aufweist, wobei die Fokussierungsvorrichtung (100, 200, 300, 400, 500) umfasst: Führungsbauteile (110, 210, 310, 410, 510), einen Riemen (120, 220, 320, 420, 520) und eine Linsenanordnung (130), die einen Gewindeabschnitt (135) aufweist,
wobei mindestens eines der Führungsbauteile (110, 210, 310, 410, 510) einen Gewindeabschnitt (115, 315, 415, 515) aufweist,
wobei die Gewindeabschnitte (115, 315, 415, 515, 135) des mindestens einen Führungsbauteils (110, 210, 310, 410, 510) und der Linsenanordnung (130) eingerichtet sind, dass sie ineinander eingreifen,
**dadurch gekennzeichnet, dass**
es drei Führungsbauteile (110, 210, 310, 410, 510) gibt und
die drei Führungsbauteile (110, 210, 310, 410, 510) die Linsenanordnung (130) umgeben,
wobei der Riemen (120, 220, 320, 420, 520) im Betriebsmodus derart um die drei Führungsbauteile (110, 210, 310, 410, 510) herum gelegt ist, dass die drei Führungsbauteile (110, 210, 310, 410, 510) zur Linsenanordnung (130) hin gedrückt werden, und das mindestens eine von den Führungsbauteilen (110, 210, 310, 410, 510), das einen Gewindeabschnitt (115, 315, 415, 515) aufweist, eingerichtet ist, gedreht zu werden, sodass es die Linsenanordnung (130) dreht.

2. Fokussierungsvorrichtung (100, 200, 300, 400, 500) nach Anspruch 1, ferner mit einem Kalibrierungsmodus, wobei das mindestens eine von den Führungsbauteilen (110, 210, 310, 410, 510), das einen Gewindeabschnitt (115, 315, 415, 515) aufweist, im Kalibrierungsmodus drehbar bezüglich der anderen Führungsbauteile (110, 210, 310, 410, 510) ist.

3. Fokussierungsvorrichtung (100, 200, 300, 400, 500) nach Anspruch 2, wobei die Fokussierungsvorrichtung (100, 200, 300, 400, 500) derart ausgelegt ist, dass im Kalibrierungsmodus, wenn das mindestens eine von den Führungsbauteilen (110, 210, 310, 410, 510), das einen Gewindeabschnitt (115, 315, 415, 515) aufweist, um einen Betrag gedreht wird, die Linsenanordnung (130) um eine Strecke verstellt wird, die dem Betrag entspricht, wobei die Strecke im Wesentlichen parallel zu einer optischen Achse der Fokussierungsvorrichtung (100, 200, 300, 400, 500) ist.

4. Fokussierungsvorrichtung (300) nach einem der Ansprüche 1-3, wobei der Riemen (320) mehrere Zähne (325) aufweist, die eingerichtet sind, in einen gezahnten Abschnitt (315) von mindestens einem von den drei Führungsbauteilen (310) einzugreifen.

5. Fokussierungsvorrichtung nach einem der Ansprüche 1-4, wobei die Linsenanordnung (130) eine Linse enthält, die den Gewindeabschnitt (135) aufweist, oder eine Linse enthält, die in einem Linsenhalter angeordnet ist, wobei der Linsenhalter den Gewindeabschnitt (135) aufweist.

6. Fokussierungsvorrichtung (200) nach einem der Ansprüche 1-5, wobei das mindestens eine von den Führungsbauteilen (210), das einen Gewindeabschnitt aufweist, eingerichtet ist, durch einen im Führungsbauteil (210) enthaltenen Motor (240) gedreht zu werden.

7. Fokussierungsvorrichtung (100, 300, 400, 500) nach einem der Ansprüche 1-5, ferner einen Motor (140, 340, 440, 540) aufweisend, wobei das mindestens eine von den Führungsbauteilen (110, 310, 410, 510), das einen Gewindeabschnitt (115, 315, 415, 515) aufweist, eingerichtet ist, durch den Riemen (120, 320, 420, 520) gedreht zu werden, der eingerichtet ist, durch den Motor (140, 340, 440, 540) gedreht zu werden.

8. Fokussierungsvorrichtung (100, 200) nach einem der Ansprüche 1-7, wobei alle drei Führungsbauteile (110, 210) einen Gewindeabschnitt (115) aufweisen und wobei die Gewindeabschnitte (115, 135) der Führungsbauteile (110, 210) und der Linsenanordnung (130) eingerichtet sind, ineinander einzugreifen.

9. Fokussierungsvorrichtung (500) nach einem der Ansprüche 1-8, wobei mindestens eines der drei Führungsbauteile (510) jeweils ein Halteelement (517) aufweist, um den Riemen (520) festzuhalten.

10. Fokussierungsvorrichtung (300) nach einem der Ansprüche 6-9, wobei der Riemen (320) mehrere Zähne (325) aufweist, die eingerichtet sind, in einen gezahnten Abschnitt (345) des Motors (340) eingreifen.

11. Fokussierungsvorrichtung (100, 300, 400, 500) nach einem der Ansprüche 7-10, wobei
der Riemen (120, 320, 420, 520) elastisch ist und/oder
der Riemen (120, 320, 420, 520) um den Motor (140, 340, 440, 540) herum angeordnet ist und der Motor (140, 340, 440, 540) eingerichtet ist, mit einer nach außen gerichteten Kraft beaufschlagt zu werden, um den Motor (140, 340, 440, 540) derart in eine Richtung nach außen zu drücken, dass der Riemen (120, 320, 420, 520) gespannt wird.

12. Fokussierungsvorrichtung (100, 200, 300, 400, 500) nach einem der Ansprüche 1-11, ferner mit einem mechanischen Anschlag zum Beenden der Drehung der Linsenanordnung (130) bei einem vorgegebenen Grenzwert.

13. Fokussierungsvorrichtung (100, 200, 300, 400, 500) nach einem der Ansprüche 1-12, wobei die Führungsbauteile (110, 210, 310, 410, 510) jeweils einen Anzeiger aufweisen, um eine Startposition für den jeweiligen Gewindeabschnitt (115, 315, 415, 515) anzuzeigen.

14. Verfahren zur Installierung einer Fokussierungsvorrichtung (100, 200, 300, 400, 500) nach einem der Ansprüche 1-13, umfassend:
Anordnen der Linsenanordnung (130) derart, dass sie von den drei Führungsbauteilen (110, 210, 310, 410, 510) umgeben ist,
Kalibrieren der Fokussierungsvorrichtung (100, 200, 300, 400, 500),
Anbringen des Riemens (120, 220, 320, 420, 520) derart um die drei Führungsbauteile (110, 210, 310, 410, 510) herum, dass die drei Führungsbauteile (110, 210, 310, 410, 510) zur Linsenanordnung (130) hin gedrückt werden

15. Verfahren zur Installierung einer Fokussierungsvorrichtung (100, 200, 300, 400, 500) nach Anspruch 14, wobei der Kalibrierungsschritt umfasst:
Drehen des mindestens einen von den Führungsbauteilen (110, 210, 310, 410, 510), das einen Gewindeabschnitt (115, 315, 415, 515) aufweist, derart um einen Betrag, dass die Linsenanordnung (130) um eine Strecke verstellt wird, die dem Betrag entspricht, wobei die Strecke im Wesentlichen parallel zu einer optischen Achse der Fokussierungsvorrichtung (100, 200, 300, 400, 500) ist.

## Revendications

1. Dispositif de focalisation (100, 200, 300, 400, 500) ayant un mode de fonctionnement, le dispositif de focalisation (100, 200, 300, 400, 500) comprenant : des organes de guidage (110, 210, 310, 410, 510), une courroie (120, 220, 320, 420, 520) et un agencement de lentille (130) comprenant une portion filetée (135),
au moins l'un des organes de guidage (110, 210, 310, 410, 510) comprenant une portion filetée (115, 315, 415, 515),
les portions filetées (115, 315, 415, 515, 135) de l'au moins un organe de guidage (110, 210, 310, 410, 510) et l'agencement de lentille (130) étant agencés pour se mettre en prise l'un avec l'autre,
**caractérisé en ce que**
il y a trois organes de guidage (110, 210, 310, 410, 510), et
les trois organes de guidage (110, 210, 310, 410, 510) entourent l'agencement de lentille (130),
dans lequel, dans le mode de fonctionnement, la courroie (120, 220, 320, 420, 520) est agencée autour des trois organes de guidage (110, 210, 310, 410, 510) de sorte que les trois organes de guidage (110, 210, 310, 410, 510) soient contraints vers l'agencement de lentille (130), et l'au moins un des organes de guidage (110, 210, 310, 410, 510) comprenant une portion filetée (115, 315, 415, 515) est agencé pour être tourné en mettant ainsi en rotation l'agencement de lentille (130).

2. Dispositif de focalisation (100, 200, 300, 400, 500) selon la revendication 1, comprenant en outre un mode d'étalonnage, dans lequel, dans le mode d'étalonnage, l'au moins un des organes de guidage (110, 210, 310, 410, 510) comprenant une portion filetée (115, 315, 415, 515) peut être mis en rotation par rapport aux autres organes de guidage (110, 210, 310, 410, 510).

3. Dispositif de focalisation (100, 200, 300, 400, 500) selon la revendication 2, ledit dispositif de focalisation (100, 200, 300, 400, 500) étant conçu de sorte que, dans le mode d'étalonnage, si l'au moins un des organes de guidage (110, 210, 310, 410, 510) comprenant une portion filetée (115, 315, 415, 515) est tourné d'une quantité, l'agencement de lentille (130) est ajusté d'une distance correspondant à ladite quantité, ladite distance étant sensiblement parallèle à un axe optique du dispositif de focalisation (100, 200, 300, 400, 500).

4. Dispositif de focalisation (300) selon l'une des revendications 1 à 3, dans lequel la courroie (320) comprend une pluralité de dents (325) agencées pour se mettre en prise avec une portion dentée (315) d'au moins un des trois organes de guidage (310).

5. Dispositif de focalisation selon l'une quelconque des revendications 1 à 4, dans lequel l'agencement de lentille (130) comprend une lentille comportant la portion filetée (135) ou une lentille agencée dans un porte-lentille, le porte-lentille comportant la portion filetée (135).

6. Dispositif de focalisation (200) selon l'une quelconque des revendications 1 à 5, dans lequel l'au moins un des organes de guidage (210) comprenant une portion filetée est agencé pour être tourné par un moteur (240) compris dans l'organe de guidage (210).

7. Dispositif de focalisation (100, 300, 400, 500) selon l'une quelconque des revendications 1 à 5, comprenant en outre un moteur (140, 340, 440, 540), dans lequel l'au moins un des organes de guidage (110, 310, 410, 510) comprenant une portion filetée (115, 315, 415, 515) est agencé pour être tourné par la courroie (120, 320, 420, 520) qui est agencée pour être tournée par le moteur (140, 340, 440, 540).

8. Dispositif de focalisation (100, 200) selon l'une quelconque des revendications 1 à 7, dans lequel tous les trois organes de guidage (110, 210) comprennent une portion filetée (115) et dans lequel les portions filetées (115, 135) des organes de guidage (110, 210) et l'agencement de lentille (130) sont agencés pour se mettre en prise l'un avec l'autre.

9. Dispositif de focalisation (500) selon l'une quelconque des revendications 1 à 8, dans lequel chacun d'au moins l'un des trois organes de guidage (510) comprend un dispositif de retenue (517) pour retenir la courroie (520).

10. Dispositif de focalisation (300) selon l'une quelconque des revendications 6 à 9, dans lequel la courroie (320) comprend une pluralité de dents (325) agencées pour se mettre en prise avec une portion dentée (345) du moteur (340).

11. Dispositif de focalisation (100, 300, 400, 500) selon l'une quelconque des revendications 7 à 10, dans lequel
la courroie (120, 320, 420, 520) est élastique, et/ou
la courroie (120, 320, 420, 520) est agencée autour du moteur (140, 340, 440, 540) et le moteur (140, 340, 440, 540) est agencé pour être soumis à une force vers l'extérieur pour contraindre le moteur (140, 340, 440, 540) dans un sens vers l'extérieur de sorte que la courroie (120, 320, 420, 520) soit étirée.

12. Dispositif de focalisation (100, 200, 300, 400, 500) selon l'une quelconque des revendications 1 à 11, comprenant en outre une butée mécanique pour arrêter la rotation de l'agencement de lentille (130) à une limite prédéterminée.

13. Dispositif de focalisation (100, 200, 300, 400, 500) selon l'une quelconque des revendications 1 à 12, dans lequel chacun des organes de guidage (110, 210, 310, 410, 510) comprend un indicateur pour indiquer une position de début de la portion filetée (115, 315, 415, 515) respective.

14. Procédé d'installation d'un dispositif de focalisation (100, 200, 300, 400, 500) selon l'une quelconque des revendications 1 à 13, comprenant :
l'agencement de l'agencement de lentille (130) de sorte qu'il soit entouré par les trois organes de guidage (110, 210, 310, 410, 510),
l'étalonnage du dispositif de focalisation (100, 200, 300, 400, 500),
l'agencement de la courroie (120, 220, 320, 420, 520) autour des trois organes de guidage (110, 210, 310, 410, 510) de sorte que les trois organes de guidage (110, 210, 310, 410, 510) soient contraints vers l'agencement de lentille (130).

15. Procédé d'installation d'un dispositif de focalisation (100, 200, 300, 400, 500) selon la revendication 14, dans lequel l'étape de l'étalonnage comprend :
la mise en rotation de l'au moins un des organes de guidage (110, 210, 310, 410, 510) comprenant une portion filetée (115, 315, 415, 515) d'une quantité telle que l'agencement de lentille (130) soit ajusté d'une distance correspondant à ladite quantité, ladite distance étant sensiblement parallèle à un axe optique du dispositif de focalisation (100, 200, 300, 400, 500).
